(19) Europäisches Patentamt
European Patent Office
Office européen des brevets

(11) **EP 4 765 729 A1**

(12) **EUROPEAN PATENT APPLICATION**

(43) Date of publication:
**24.06.2026 Bulletin 2026/26**

(21) Application number: **24220947.6**

(22) Date of filing: **18.12.2024**

(51) International Patent Classification (IPC):
*H04L 9/40* (2022.01)    *G06Q 10/107* (2023.01)

(52) Cooperative Patent Classification (CPC):
**H04L 63/1483; G06Q 10/0635; G06Q 10/107;
G06Q 30/018; G06Q 30/0225; G06Q 30/0248;
G06Q 50/265; H04L 63/1425**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Heimdal Security A/S
1606 Copenhagen V (DK)**

(72) Inventors:
• **RUSU, Valentin
1606 København V (DK)**
• **CERNEI, Eugeniu
1606 København V (DK)**

(74) Representative: **Chas. Hude A/S
Langebrogade 3B
1411 Copenhagen K (DK)**

Remarks:
Amended claims in accordance with Rule 137(2)
EPC.

(54) **METHOD AND SYSTEM FOR IMPROVING EMAIL SECURITY**

(57)     Disclosed is a computer-implemented method and system for improving email security. The method comprises receiving an email. The email comprises one or more features. The method comprises performing feature extraction of the one or more features from the email. The method comprises analysing the one or more features to identify anomalous email behavior using an Empirical Cumulative Outlier Detection (ECOD) algorithm. The analysis comprises determining tail probabilities for each of the one or more features using a feature distribution model representing both normal and anomalous email behavior. The analysis comprises identifying anomalous email behavior based on the tail probabilities

FIG. 1

## Description

FIELD

The present disclosure relates a computer implemented method and a system for improving email security.

BACKGROUND

In the contemporary digital landscape, email has become a cornerstone of communication, facilitating both personal and professional interactions worldwide. However, the increasing reliance on email communication has also led to significant security challenges due to fraudulent emails, which can take various forms, including phishing attacks, emails containing malware, spoofed sender identities, and social engineering schemes. These malicious communications often deceive recipients into revealing sensitive information, such as login credentials or financial details, or trick them into downloading malware that compromises the security of entire networks.

Fraudulent emails pose severe risks to both individuals and companies. In the corporate environment, a successful phishing attack can lead to data breaches, financial losses, or the unauthorised access of critical infrastructure. On a personal level, victims may suffer from identity theft, financial fraud, or exposure of private information. Given the serious and often far-reaching consequences of such attacks, securing email communication has become a high-priority concern for cybersecurity experts and organisations worldwide.

To combat the threat of fraudulent emails, several security measures are commonly employed. These include spam filters and blocklists that maintain a database of known malicious email sources. However, spam filters often struggle to adapt to the evolving tactics used by malicious actors, resulting in a high rate of false positives or false negatives. Furthermore, these are typically general purpose related and are therefore not ideal for specific types of industries, such as banking, retail and marketing as these face unique threats compared to other industries. Blocklists are reactive measures that typically only address known threats and are ineffective against new, previously unidentified attacks.

Some advanced systems use supervised machine learning models trained on extensive datasets of known threats to identify and flag potentially fraudulent communications. However, these extensive datasets need to be labelled, which makes these systems very expensive. Moreover, due to the diversity within email systems, it is very challenging to create a supervised learning system that generalises well across all email variations.

Given the rapidly evolving landscape of email-based threats, there is a pressing need for an improved method and system for improving email security.

SUMMARY

In accordance with the present disclosure, the above-mentioned and other objects are obtained by the disclosed method and system.

Disclosed is a computer-implemented method for improving email security. The method comprises receiving an email. The email comprises one or more features. The method comprises performing feature extraction of the one or more features from the email. The method comprises analysing the one or more features to identify anomalous email behavior using an Empirical Cumulative Outlier Detection (ECOD) algorithm. The analysis comprises determining tail probabilities for each of the one or more features using a feature distribution model representing both normal and anomalous email behavior. The analysis comprises identifying anomalous email behavior based on the tail probabilities.

It is an advantage that a method for improving email security is provided. It is an advantage that an improved method of identifying or detecting or determining abnormal or potentially fraudulent emails is provided. It is an advantage that the method provides for an unsupervised learning algorithm because this provides that data does not need to be labelled. It is an advantage that the method can be tailored to adapt across different corporate environments. It is an advantage that the method can provide identification of abnormal or potentially fraudulent email behaviour based on one or more features, because this may provide a more robust assessment.

The method comprises receiving an email or electronic mail or e-mail. A user in this regard is a recipient of the email. The user may receive the email in an email inbox or a email dashboard, which in this context may be a visual interface or platform designed to present key metrics, insights, and tools for managing, analysing, or monitoring email-related data.

The email comprises one or more features. The one or more features may reflect various aspects of the email such metadata, links, attachments, and language patterns. The one or more features are described in more detail further below.

The method comprises performing feature extraction of the one or more features from the email. The one or more features extracted from each email may be represented as:

$$F_{\text{email}} = \{f_1, f_2, ..., f_{\text{d}}\},$$

where $F_{\text{email}}$ represents email with d features and $f_1, f_2, ...f_d$ are the individual features of the one or more features. The extraction of features from the email may be performed using various tools known to the skilled person. A detailed example will be provided further below.

The method comprises analysing the one or more features to identify anomalous email behavior using an ECOD algorithm. As stated above, ECOD stands for Empirical Cumulative Outlier Detection. Therefore, anomalous email behavior is this context may be described as an outlier, or out of the ordinary, compared to normal email behavior. For example, if the majority of emails are received during the daytime, it may be identified as an outlier, or abnormal email behavior, if an email is received late a night.

The analysis comprises determining tail probabilities for each of the one or more features using a feature distribution model representing both normal and anomalous email behavior. The tail probabilities for a specific feature in the email may be described as a measure of how extreme or how abnormal or how much of an outlier the specific feature is.

The analysis comprises identifying or determining anomalous email behavior based on the tail probabilities. Thus, in other words, the analysis may comprise identifying anomalous email behavior in the received email based on the tail probabilities.

In some embodiments, the method further comprises determining the feature distribution model. This may be done prior to receiving the email. However, the determination of the feature distribution model may also be done prior to the method, such as before the method commences. The determination of the feature distribution model may also be performed after receiving the email. The determination of the feature distribution model may also be performed after performing feature extraction of the one or more features from the email.

In some embodiments, the feature distribution model is based on a plurality of training emails. The plurality of training emails may be described as

$X_{training} = \{X_i\}_{i=1}^{n}$ , with $n$ denoting the number of training emails. The plurality of training emails may comprise one or more features. The feature distribution model may be determined or calculated using an Empirical Cumulative Distribution Function (ECDF) for each of the one or more features across all of the plurality of training emails. The ECDF may be described as a distribution function associated with an empirical measure of a sample. ECDF may be known as a so-called step function that jumps up by 1/$n$ at each of $n$ data points. Its value at any specified value of a measured variable may be described as the fraction of observations of the measured variable that are less than or equal to the specified value. Thus, in other words, the feature distribution model may be a multi-dimensional distribution map representing all email behavior, including both normal email behavior and anomalous email behavior, based on the one or more features in the plurality of training emails. The tail probabilities for a specific feature in the email may be described as a measure of how extreme or how abnormal or how much of an outlier the specific feature is, within the ECDF of that feature in the plurality of training emails. The plurality of training emails may comprise at least 500, such as at least 750, such as at least 1000 training emails. The inventors of the present invention have found that using at least 1000 training emails provides for at advantageously robust feature distribution model. The plurality of training emails may comprise general emails. The plurality of training emails may comprise industry specific emails. This is an advantage because the feature distribution model may be tailored to a specific industry, such as e.g. banking, retail, or marketing. The plurality of training emails may comprise company specific. For example, the plurality of emails may comprise emails received by a same company. This is an advantage because the feature distribution model may be tailored to a specific company.

In some embodiments, the plurality of training emails comprises emails received by a same user. This is an advantage because the feature distribution model may be tailored to the specific user. Thus, the plurality of training emails may comprise a mix of general and/or specific industry and/or company specific emails, as well as emails received by the same user. This is an advantage because the feature distribution model may be tailored to the specific user, but without solely relying on training emails received by the same user. For example, if a user is a new employee at company A, the majority of the plurality of training emails may be general and/or specific industry and/or company specific emails, while a first number of emails receiving by the user is also comprised in the plurality of training emails. The number of emails received by the same user in the plurality of training emails should be sufficient to represent normal and abnormal emails behavior in the emails received. Thus, the plurality of training emails may comprise at least 5, such as at least 6, such as at least 7, such as at least 8, such as at least 9, such as preferably at least 10 emails received by the same user. The inventors of the present invention have found that when the plurality of training emails comprises at least 10 emails received by the same user, this provides for at advantageously feature distribution model that is sufficient to represent normal and abnormal emails behavior in the emails received by that user. In some embodiments, the plurality of training emails only consist of emails received by the same user. In these embodiments, the minimum required number of training emails equally applies, thus in these embodiments, the plurality of training emails may comprise at least 500, such as at least 750, such as at least 1000 training emails.

In some embodiments, the feature distribution model may be determined or re-determined at any time, for example before or after the email has been received. This is an advantage, because the method may be a reoccurring method that may be applied every time a new email is received.

In some embodiments, the method further comprises determining or re-determining the feature distribution model based on the email. In other words, the feature distribution model may be determined or re-determined with the email used as input for the model. Thus, the received email may be added to or included in the plurality of training emails. The feature distribution model may be re-determined with the received email comprised in the plurality of training emails. The re-determination of the feature distribution model may be performed before or after identifying anomalous email behavior based on the tail probabilities. It is an advantage to re-determine the feature distribution model based on the email because it may provide that the feature distribution model over time becomes more accurately tailored to the specific user. In other words, it provides that the method remains up to date, is agile in adapting to potential new threats.

In some embodiments, where the method further comprises re-determining the feature distribution model based on the email, this may be done for every email received.

Alternatively, in some embodiments, where the method further comprises re-determining the feature distribution model based on the email, this may not be done for every email received, but rather this may be done intermittently. This may for example be done for a set number of received emails, such as for every tenth received email. Alternatively or additionally, this may be done for some emails for which input is received from the user, or for all emails for which input is received from the user, as described further below. This is an advantage because it may conserve computational resources by not having to re-determine the feature distribution model every time a new email is received.

In some embodiments, where the method further comprises re-determining the feature distribution model based on the email and where this is not done for every email received, the feature distribution model may then be evaluated for each feature for the email with the one or more features, using the previously determined or calculated values from the feature distribution model.

In some embodiments, the plurality of training emails comprises a fixed number of training emails and the training emails gets replaced as new training emails are added to the plurality of training emails. Alternatively or additionally, in some embodiments, the plurality of training emails comprises emails received within a fixed period of time, such as for example, within the last three months. This may also be referred to as a Sliding Window Buffer concept, Rolling Data Window concept, or a Circular Buffer concept. This is an advantage because it provides the advantages as above, without the need for extra processing power to handle an increasing number of training emails.

In some embodiments, the feature distribution model comprises both a left-tail ECDF and a right-tail ECDF for each feature. With $z$ corresponding to the value of the j-th feature of a given data point, $X_i^{(j)}$, the left-tail ECDF, $\hat{F}_{\text{left}}^{(j)}(z)$, and the right-tail ECDF, $\hat{F}_{\text{right}}^{(j)}(z)$, for each feature may be described as:

$$\hat{F}_{\text{left}}^{(j)}(z) = \frac{1}{n}\sum_{i=1}^{n} 1\left\{X_i^{(j)} \leq z\right\},$$

and

$$\hat{F}_{\text{right}}^{(j)}(z) = \frac{1}{n}\sum_{i=1}^{n} 1\left\{X_i^{(j)} \geq z\right\},$$

where $1\left\{X_i^{(j)} \leq z\right\}$ is an indicator function that is 1 when its argument is true and is 0 otherwise.

In some embodiments, the analysis further comprises determining a skewness coefficient for each feature. The skewness coefficient may be described as:

$$\gamma_j = \frac{\frac{1}{n}\sum_{i=1}^{n}\left(X_i^{(j)} - \overline{X^{(j)}}\right)^3}{\left(\frac{1}{n-1}\sum_{i=1}^{n}\left(X_i^{(j)} - \overline{X^{(j)}}\right)^2\right)^{3/2}},$$

Where $\overline{X^{(j)}} = \frac{1}{n}\sum_{i=1}^{n} X_i^{(j)}$ is the mean of the j-th feature. The skewness coefficient may be used for determining if the tail probability for each of the one or more features may be based on the right-tail ECDF or the left-tail ECDF. Thus, the skewness coefficient may be used to decide whether the tail probability for each feature is based on the right-tail ECDF or the left-tail ECDF. If $\gamma_j < 0$, the left-tail ECDF may be used, otherwise, the right-tail ECDF may be used. Using the skewness coefficient is an advantage because it may provide for correction of a potential asymmetry in the feature distributions. While the ECOD algorithm may theoretically detect outliers on both the right-tail ECDF and the left-tail ECDF, the skewness coefficient may provide that the outliner detection is optimised by focusing on the side where outliers are more likely to be significant, thereby providing a more effective and robust method.

In some embodiments, a feature outlier score may be determined for each feature of the one or more features. The feature outlier score may be based on the tail probability of that feature. Both a left-tail outlier score (the negative sum of the logarithms of the left-tail ECDF values) and a right-tail outlier score (the negative sum of the logarithms of the right-tail ECDF values) may be determined for each feature, or alternatively only one of them, if so decided due to the determination of the skewness coefficient. The left-tail outlier score for the email, $O_i^{\text{left}}$, and the right-tail outlier score for the email, $O_i^{\text{right}}$, may be described as:

$$O_i^{\text{left}} = -\sum_{j=1}^{d} \log\left(\hat{F}_{\text{left}}^{(j)}\left(X_i^{(j)}\right)\right),$$

and

$$O_i^{\text{right}} = -\sum_{j=1}^{d} \log\left(\hat{F}_{\text{right}}^{(j)}\left(X_i^{(j)}\right)\right).$$

In some embodiments, the analysis further comprises determining an email outlier score for the email. The email outlier score, $O_i$, may be determined based on the tail probabilities for all of the one or more features. The email outlier score may be the aggregated value of right tail outlier score and the right tail outlier score, such as using the mean value or the maximum value of the two. For example, the email outlier score may be described as:

$$O_i = \max\left(O_i^{\text{left}}, O_i^{\text{right}}\right).$$

Thus, the email outlier score may be a single number that represents how much of an outlier the email is considered to be across all features. A higher score may indicate that the data point may be more likely to be an abnormal email, while a lower score suggests it may be more typical or "normal" email.

In some embodiments, the analysis further comprises comparing the outlier score to a detection threshold. The detection threshold may be one or more thresholds, such as "danger level 1", "danger level 2", etc. In some embodiments, the identification of anomalous email behavior is provided in response to this comparison. Thus, in other words, the analysis may comprise, in response to this comparison, determining or identifying if the email exhibits anomalous email behavior.

In some embodiments, the method further comprises deleting the email from the user's inbox if the outlier score is high, such as above the detection limit. In some embodiments, the method further comprises, in response to an identification of anomalous email behavior in the email, providing an output to the user for alerting the user. This is an advantage because the user may then make precautionary measures, such as e.g. refraining accessing e.g. spam links. This may be an advantage for the emails that are identified as representing abnormal email behavior but not above the detection threshold or not above a certain detection threshold if there are one or more detection thresholds. The user may still receive the email, but, due to the output, may be alerted to be aware of the potential security risks. The output may be visual, haptic and/or audio output. In some embodiments, the method further comprises receiving input from the user regarding the identified anomalous email behavior. The input from the user may be assigning the email a classification such as e.g. "normal", abnormal" or "unsure". The input from the user may be about the email in general. The input from the user may be about specific features. In some embodiments, the method further comprises, in response to receiving the user input, updating the detection threshold according to the user input. This is an advantage because it may provide that the method, in addition to being unsupervised as disclosed above, may comprise a supervised learning layer, in which the input from the user is used to further improve the method. Additionally or alternatively, In some embodiments, the method further comprises, in response to receiving the user input, re-determining the feature distribution model based on the user input. This is an advantage because it may provide that the method, in addition to being unsupervised as disclosed above, may comprise a supervised learning layer, in which the input from the user is used to further improve the method.

In some embodiments, the method further comprises assigning the email to be a verification email for identifying potential false positives of anomalous email behavior and/or false negative detections of anomalous email behavior. The email may be assigned as a verification email based on random selection or by another selection criteria. The method may further comprise that the user is presented with the verification email. The method may further comprise that the user is presented with information pertaining to the verification email. In some embodiments, the method further comprises receiving input from the user regarding the verification email. The input from the user may be assigning the email a classification such as e.g. "normal", abnormal" or "unsure". The input from the user may be about the email in general. The input from the user may be about specific features. In some embodiments, the method further comprises, in response to receiving the user input, updating the detection threshold according to the user input. This is an advantage because it may provide that the method, in addition to being unsupervised as disclosed above, may comprise a supervised learning layer, in which the input from the user is used to further improve the method. Additionally or alternatively, In some embodiments, the method further comprises, in response to receiving the user input, re-determining the feature distribution model based on the user input. This is an advantage because it may provide that the method, in addition to being unsupervised as disclosed above, may comprise a supervised learning layer, in which the input from the user is used to further improve the method.

The method step of, in response to the identification of anomalous email behavior in the email, providing the output to the user for alerting the user as well as all the details in relation to this, may be performed in parallel with the method step of assigning the email to be the verification email for identifying potential false positives of anomalous email behavior and/or false negative detections of anomalous email behavior as well as all the details in relation to this. Alternatively, only one branch may be performed or they may be performed sequential.

In some embodiments, re-determining the feature distribution model based on the user input comprises assigning weights in relation to at least one feature of the one or more features. In some embodiments, re-determining the feature distribution model based on the user input comprises assigning weights in relation to the email. In other words, the feature distribution model may be based on weighted ECDFs that is configured for the option to assign different importance or weights to datapoints when re-determining the feature distribution model. Thus, instead of treating all data points in each distribution function equally, weights may be used to increase or decrease the influence of specific data points based on the user input. For example, if an email is flagged as a false positive, a weight can be used to reduce the contribution for that datapoint. This may apply to the email as such or to at least one feature of the one or more features. For example, if an email is flagged as a false negative, a weight can be used to increase the contribution for that datapoint. This may apply to the email as such or to at least one feature of the one or more features. This is an advantage because it may provide that the feature distribution model may be further tailored to the specific user. This is an advantage because it may provide that the method remains up to date and is agile in adapting to potential new threats. This is an advantage because it may provide that identified false positives and/or false negatives may corrected in the feature distribution model.

In some embodiments, the one or more features comprise features related to email structure in an header and/or a body of the email. For example, the one or more features may comprise features related to email authentication standards, such as DomainKeys Identified Mail (DKIM), Sender Policy Framework (SPF), and Domain-based Message Authentication, Reporting, and Conformance (DMARC). Alternatively or additionally, the one or more features may comprise features related to timing information, such as when the email was received. Alternatively or additionally, the one or more features may comprise features related to HTML tag analysis that may comprise determination of HTML tags and a number of predetermined HTML tags. Alternatively or additionally, the one or more features may comprise features related to attachment analysis that may comprise determination of a threat-level, a type and a size of an attachment.

In some embodiments, the one or more features comprise text related features. For example, the one or more features may comprise features related to intent detection that may comprise a score configured for indicating the likely-hood of various intentions behind the email content determined via natural language processing techniques. Alternatively or additionally, the one or more features may comprise features related to textual metrics that may comprise determination of a word count, a paragraph count, and/or a character count. Alternatively or additionally, the one or more features may comprise features related to sentiment detection that may comprise a score configured for indicating the likelihood of the sentiment of the email content determined via natural language processing techniques and categorised into positive sentiment, negative sentiment or neutral sentiment. Alternatively or additionally, the one or more features may comprise features related to language detection that may comprise determining the language(s) used in the email content and probabilities associated with use of different languages. Alternatively or additionally, the one or more features may comprise features related to financial term detection that may comprise determination of a word count of financial terms.

In some embodiments, the one or more features comprise uniform resource locator (URL) related features. For example, the one or more features may comprise features related to suspicious link detection that may comprise a score for each link in the email content, the score may be determined by a neural network, such as a dedicated URL analyser neural network. Alternatively or additionally, the one or more features may comprise features related to clickbait detection that may comprise determining a score configured for indicating the likelihood of the content of the email communication being clickbait, the score may be determined by a neural network, such as a generic neural network.

In some embodiments, the one or more features comprise features related to the user's email contacts. For example, the one or more features may comprise features related interaction detection that may comprise a determination of interaction frequencies with various contacts of a user's email contacts.

It is an advantage that the method is able to identifying anomalous email behavior for a vast variety of features, because this may provide a versatile model that may be able to identify anomalous email behavior on potentially all elements of the email. Thus, if anything is abnormal in the email in any way, the model may be able to identify this. In this sense, the more features, the better. However, it should be noted that the model may also be able to provide all the above benefits and advantages with a lower number of features and with even just one feature, because often time the people behind anomalous email behavior are using the same feature they know have worked in the past.

Also disclosed is an email security system comprising means for carrying out the method of this disclosure. The system comprises a data collection module configured for receiving the email. The email comprises one or more features. The system comprises a extraction module configured for performing feature extraction of the one or more features on the email. The system comprises an analysing module configured for analysing the one or more features to identify anomalous email behavior using an ECOD algorithm.

In some embodiments, the system is configured for determining and re-determining the feature distribution model as described above for the disclosed method. Thus, in the following, use of the term "data" may refer to the email received in the independent claims, as well as the emails comprised in the plurality of training emails, as well as any derivatives or byproducts of such these, respectively, including metadata and/or the one or more features.

In some embodiments, the data collection module comprises a plugin interface. The plugin interface may be configured for integration with the user's inbox or email platform. This is an advantage because it may provide real-time data collection. In some embodiments, the data collection module is configured for transmitting data to the analysing module for further analysis. In some embodiments, the data collection module is configured for transmitting the data to the extraction module for feature extraction.

In some embodiments, the extraction module is comprised in the analysing module.

In some embodiments, the extraction module comprises a search module. The search module may comprise a search engine and a Hyper Text Transfer Protocol (HTTP) web interface. The search module may be configured for using schema-free JavaScript Object Notation (JSON). This is an advantage because it may provide flexibility and does not enforce a predefined structure or schema on the data. The search module may be configured for using Elastic Search. The search module may be configured for using Elastic Search combined with or based on a Lucene library.

In some embodiments, the extraction module further comprises a virtual machine, such as one or more virtual machines. The one or more virtual machines may be configured for parsing data or metadata. The one or more virtual machines may be configured for performing Natural Language Processing tasks, such as e.g. tokenization, named entity recognition, sentiment analysis, or keyword extraction. The one or more virtual machines may be configured for generating vectors configured for being input to the ECOD analysis as described above for the disclosed method. The one or more virtual machines may be configured for providing scalable, flexible and/or modular execution of feature extraction and data transformations tasks. It is an advantage that the one or more virtual machine may be configured to act as a bridge between received data and advanced AL/ML components of the system. The one or more virtual machines may comprise a component configured for scheduling and queuing background tasks, such as e.g. Celery. The one or more virtual machines may comprise a component configured for packaging and isolating computational tasks, such as e.g. Containers. The one or more virtual machines may comprise a component configured for managing and scaling workloads, such as e.g. Kubernetes, The one or more virtual machines may be comprised in the analysing module.

In some embodiments, the extraction module further comprises a service bus configured for distributing the collected data from the search module to the virtual machines. The service bus may be comprised in the analysing module.

In some embodiments, the analysing module comprises an artificial intelligence (AI) module that is configured for performing the ECOD analysis as described, including determining and re-determining the feature distribution model as described above for the disclosed method. The AI module may also or alternatively be described as a machine learning (ML) module.

In some embodiments, the system comprises a module, such as one or more modules, configured for managing the AL module specifically or the system in general. For example, the system may comprise a module comprising MLFlow. For example, the system may comprise a module comprising PostgreSQL. Such modules may be configured for managing model updates and dataset visioning, thereby providing that the system may continuously improve by learning from new data. Such modules may be comprised in the analysing module.

In some embodiments, the system comprises a module, such as one or more modules, configured for monitoring the AL module specifically or the system in general. For example, the system may comprise a module comprising Grafana. For example, the system may comprise a module comprising Prometheus. Such modules may be configured for providing real-time monitoring of system performance and metrics, thereby providing insight into the identify anomalous email behavior. Such modules may be comprised in the analysing module.

In some embodiments, the system further comprises a user interface, such as a dashboard. The dashboard may be configured for alerting the user as described in the disclosed method. The dashboard may be configured for receiving user input as described in the disclosed method. The dashboard may be configured for transmitting data or information pertaining to the data to the analysing module. The dashboard may be configured for receiving data or information pertaining to the data from the analysing module. The dashboard may be configured for being cloud-based. Alternatively or additionally, in some embodiments, the analysing module is configured for being cloud-based. This is an advantage because it may provide large scalability of cloud infrastructure. Thus, because all the computational heavy processing may be performed in the cloud, the system may provide rapid and scalable detection across multiple users simultaneously. This may provide system efficiency, making it easier to scale as data increases. Furthermore, it is an advantage, because data from several users may contribute to the plurality of training emails.

The present invention relates to different aspects including the method described above and in the following, and the corresponding system. The system yields one or more of the benefits and advantages described in connection with the method, and comprises one or more embodiments corresponding to the embodiments described in connection with the method and/or disclosed in the appended claims or items.

## BRIEF DESCRIPTION OF THE DRAWINGS

The above and other features and advantages will become readily apparent to those skilled in the art by the following exemplary embodiments thereof with reference to the attached drawings, in which:

Fig. 1 illustrates a flow-diagram for an exemplary computer implemented method.
Fig. 2 schematically illustrates an exemplary email security system.

## DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention nor as a limitation on the scope of the claimed invention. In addition, an illustrated embodiment needs not have all aspects or advantages shown. An aspect or an advantage described in conjunction with a particular embodiment is not necessarily limited to that embodiment and can be practiced in any other embodiment even if not so illustrated, or if not so explicitly described. Throughout, the same reference numerals are used for identical or corresponding parts.

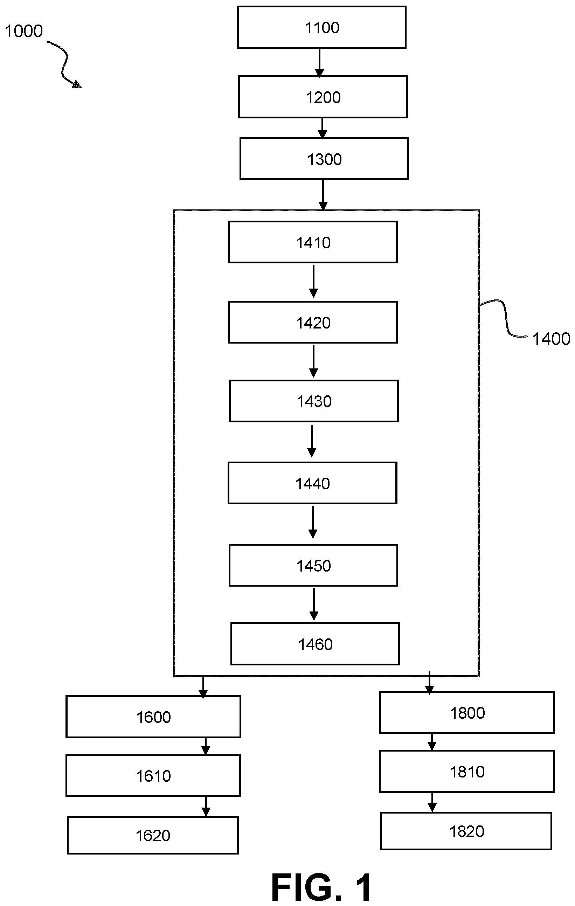

Fig. 1 illustrates an flow-diagram for an exemplary computer implemented method 1000 for improving email security. The method 1000 comprises receiving 1200 an email. The email comprises one or more features. The method comprises performing 1300 feature extraction of the one or more features from the email. The method comprises analysing 1400 the one or more features to identify anomalous email behavior using an Empirical Cumulative Outlier Detection (ECOD) algorithm. The analysis comprises determining 1410 tail probabilities for each of the one or more features using a feature distribution model representing both normal and anomalous email behavior. The analysis comprises identifying or determining 1450 anomalous email behavior based on the tail probabilities.

In some embodiments, the feature distribution model is based on a plurality of training emails. The plurality of training emails may comprise one or more features. The feature distribution model may be determined using an Empirical Cumulative Distribution Function (ECDF) for each of the one or more features across all of the plurality of training emails. In some embodiments, the plurality of training emails comprises emails received by a same user.

In figure 1, the method further comprises determining 1100 the feature distribution model. In figure 1, it is shown as part of the method, prior to receiving the email 1200. However, the determination 1100 of the feature distribution model may also be done prior to the method 1000, such as before the method 1000 commences. The determination 1100 of the feature distribution model may also be performed after receiving 1200 the email. The determination 1100 of the feature distribution model may also be performed after performing 1300 feature extraction of the one or more features from the email.

In some embodiments, the method further comprises determining or re-determining the feature distribution model based on the email.

In some embodiments, the feature distribution model comprises both a left-tail ECDF and a right-tail ECDF for each feature.

In figure 1, the analysis 1400 further comprises determining 1420 a skewness coefficient for each feature. The skewness coefficient may be used for determining if the tail probability for each of the one or more features may be based on the right-tail ECDF or the left-tail ECDF.

In figure 1, the analysis 1400 further comprises determining 1430 an email outlier score for the email. The email outlier score may be determined based on the tail probabilities for all of the one or more features. In figure 1, the analysis 1400 further comprises comparing 1440 the outlier score to a detection threshold. In figure 1, the identification 1450 of anomalous email behavior is provided in response to this comparison.

In figure 1, the method further comprises, in response to an identification of anomalous email behavior in the email, providing 1600 an output to the user for alerting the user. In figure 1, the method further comprises receiving 1610 input from the user regarding the identified anomalous email behavior. In figure 1, the method further comprises, in response to receiving the user input, updating 1620 the detection threshold according to the user input. Alternatively or additionally, method step 1620 comprises, in response to receiving the user input, re-determining the feature distribution model based on the user input.

In some embodiments, the method further comprises assigning 1800 the email to be a verification email for identifying potential false positives of anomalous email behavior and/or false negative detections of anomalous email behavior. In some embodiments, the method further comprises receiving 1810 input from the user regarding the verification email. In some embodiments, the method further comprises, in response to receiving the user input, updating 1820 the detection threshold according to the user input. Alternatively or additionally, method step 1820 comprises, in response to receiving the user input, re-determining the feature distribution model based on the user input.

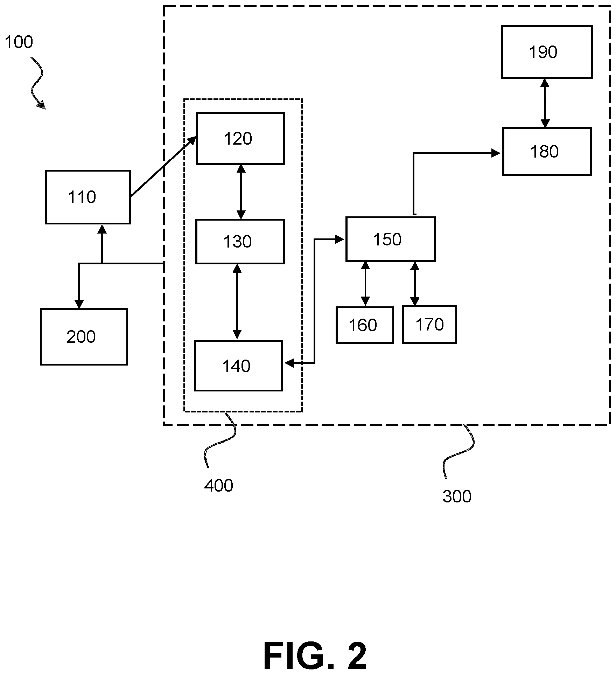

The method steps 1600, 1610 and 1620 are shown in figure 2 as being performed in parallel with the method steps of 1800, 1820 and 1820. Alternatively, only one branch may be performed or they may be performed sequential.

In some embodiments, re-determining the feature distribution model based on the user input comprises assigning weights in relation to at least one feature of the one or more features.

In some embodiments, the one or more features comprise features related to email structure in an header and/or a body of the email.

In some embodiments, the one or more features comprise text related features.

In some embodiments, the one or more features comprise uniform resource locator (URL) related features.

In some embodiments, the one or more features comprise features related to the user's email contacts.

Fig. 2 schematically illustrates an exemplary email security system 100. The system 100 comprises means for carrying out an exemplary method of this disclosure. The system 100 comprises a data collection module 110 configured for receiving the email. The email comprises one or more features. The system comprises a extraction module 400 configured for performing feature extraction of the one or more features on the email. The system comprises an analysing module 300 configured for analysing the one or more features to identify anomalous email behavior using an ECOD algorithm.

In some embodiments, the data collection module 110 comprises a plugin interface. The plugin interface may be configured for integration with the user's inbox or email platform. In figure 2, the data collection module 110 is configured for transmitting data to the analysing module 300 for further analysis. In figure 2, the data collection module 110 is configured for transmitting the data to the extraction module 400 for feature extraction.

In figure 2, the extraction module 400 is comprised in the analysing module 300.

In figure 2, the extraction module 400 comprises a search module 120. For example, the search module may comprise Elasticsearch.

In figure 2, the extraction module 400 further comprises one or more virtual machines 140. The one or more virtual machines 140 may be comprised in the analysing module 400.

In figure 2, the extraction module 400 further comprises a service bus 130 configured for distributing the collected data from the search module 120 to the virtual machines 140. The service bus 130 may be comprised in the analysing module 300.

In figure 2, the analysing module 300 comprises an artificial intelligence (AI) module 150 that is configured for performing the ECOD analysis as described, including determining and re-determining the feature distribution model as described above for the disclosed method.

In figure 2, the system 100 comprises one or more modules 160, 170 configured for managing the AI module 150 specifically or the system in general. For example, the system may comprise one or more modules comprising MLFlow and PostgreSQL. Such modules 160,170 are in figure 2 comprised in the analysing module 300.

In figure 2, the system 100 comprises one or more modules 180, 190 configured for monitoring the AL module 150 specifically or the system in general. For example, the system may comprise one or more modules comprising Grafana and Prometheus. Such modules 180, 190 may be comprised in the analysing module 300.

In figure 2, the system further comprises a user interface 200, such as a dashboard. The dashboard 200 may be configured for alerting the user as described in the disclosed method. The dashboard 200 may be configured for receiving user input as described in the disclosed method. The dashboard 200 may be configured for transmitting data or information pertaining to the data to the analysing module 300. The dashboard 200 may be configured for receiving data or information pertaining to the data from the analysing module 300. The dashboard 200 may be configured for being cloud-based. Alternatively or additionally, in some embodiments, the analysing module 300 is configured for being cloud-based.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive manner. The claimed invention is intended to cover all alternatives, modifications and equivalents.

LIST OF REFERENCES

    100 system
    110 data collection module
    120 Search module
    130 Service Bus
    140 Virtual Machines
    150 AI module
    160 MLFlow
    170 PostgreSQL
    180 Grafana
    190 Prometheus
    200 Dashboard
    300 analysing module
    400 extraction module
    1000 method
    1100 determining feature distribution model
    1200 receiving email
    1300 performing feature extraction
    1400 analysing
    1410 determining tail probabilities
    1420 determining skewness coefficient
    1430 determining email outlier score
    1450 identifying anomalous email behaviour
    1600 providing output for alerting user

1610 receiving input from user

1620 updating detection threshold/re-determining feature distribution model

1800 assigning email to be a verification email

1810 receiving input from user

1820 updating detection threshold/re-determining feature distribution model

LIST OF ITEMS

1. A computer-implemented method for improving email security, the method comprises:

- receiving an email, wherein the email comprises one or more features;
- performing feature extraction of the one or more features from the email; and
- analysing the one or more features to identify anomalous email behav-iorusing an Empirical Cumulative Outlier Detection -ECOD- algorithm, wherein the analysis comprises:

    - determining tail probabilities for each of the one or more features using a feature distribution model representing both normal and anomalous email behavior, and
    - identifying anomalous email behavior based on the tail probabilities.

2. The method according to item 1, wherein the feature distribution model is based on a plurality of training emails, wherein the plurality of training emails comprises one or more features; and wherein the feature distribution model is determined using an Empirical Cumulative Distribution Function - ECDF - for each of the one or more features across all of the plurality of training emails.

3. The method according to item 2, wherein the plurality of training emails comprises emails received by a same user.

4. The method according to any one of the preceding items, wherein the method further comprises re-determining the feature distribution model based on the email.

5. The method according to any one of the preceding items, wherein the feature distribution model comprises both a left-tail ECDF and a right-tail ECDF for each feature.

6. The method according to the preceding item, wherein the analysis further comprises determining a skewness coefficient for each feature; and wherein the skewness coefficient is used for determining if the tail probability for each of the one or more features is based on the right-tail ECDF or the left-tail ECDF.

7. The method according to any one of the preceding items, wherein the analysis further comprises:

- determining an email outlier score for the email, wherein the email outlier score is determined based on the tail probabilities for all of the one or more features;
- comparing the outlier score to a detection threshold; and

wherein the identification of anomalous email behavior is provided in response to this comparison.

8. The method according to any one of the preceding items, wherein the method further comprises:

- in response to an identification of anomalous email behavior in the email, providing an output to the user for alerting the user;
- receiving input from the user regarding the identified anomalous email behavior; and
- in response to receiving the user input, updating the detection threshold according to the user input and/or re-determining the feature distribution model based on the user input.

9. The method according to any one of the preceding items, wherein the method further comprises:

- assigning the email to be a verification email for identifying potential false positives of anomalous email behavior and/or false negative detections of anomalous email behavior;
- receiving input from the user regarding the verification email; and
- in response to receiving the user input, updating the detection threshold according to the user input and/or re-determining the feature distribution model based on the user input.

10. The method according to any one of the preceding items, wherein re-determining the feature distribution model based on the user input comprises assigning weights in relation to at least one feature of the one or more features.

11. The method according to any one of the preceding items, wherein the one or more features comprise features related to email structure in an header and/or a body of the email.

12. The method according to any one of the preceding items, wherein the one or more features comprise text related features.

13. The method according to any one of the preceding items, wherein the one or more features comprise uniform resource locator - URL- related features.

14. The method according to any one of the preceding items, wherein the one or more features comprise features related to the user's email contacts.

15. An email security system comprising means for carrying out the method of any one of the preceding items, wherein the system comprises:

- a data collection module configured for receiving the email, wherein the email comprises one or more features;
- a extraction module configured for performing feature extraction of the one or more features on the email; and
- an analysing module configured for analysing the one or more features to identify anomalous email behavior using an ECOD algorithm.

16. An email security system, wherein the system comprises:

- a plugin interface that receives an email, wherein the email comprises one or more features;
- a extraction module that performs feature extraction of the one or more features on the email, wherein the extraction module comprises a search engine and a Hyper Text Transfer Protocol - HTTP- web interface, and wherein the extraction module further comprises a virtual machine; and
- an artificial intelligence module that analyses the one or more features to identify anomalous email behavior using an ECOD algorithm.

**Claims**

1. A computer-implemented method for improving email security, the method comprises:

   • receiving an email, wherein the email comprises one or more features;
   • performing feature extraction of the one or more features from the email; and
   • analysing the one or more features to identify anomalous email behavior using an Empirical Cumulative Outlier Detection -ECOD- algorithm, wherein the analysis comprises:

      - determining tail probabilities for each of the one or more features using a feature distribution model representing both normal and anomalous email behavior, and
      - identifying anomalous email behavior based on the tail probabilities.

2. The method according to claim 1, wherein the feature distribution model is based on a plurality of training emails, wherein the plurality of training emails comprises one or more features; and wherein the feature distribution model is determined using an Empirical Cumulative Distribution Function - ECDF - for each of the one or more features across all of the plurality of training emails.

3. The method according to claim 2, wherein the plurality of training emails comprises emails received by a same user.

4. The method according to any one of the preceding claims, wherein the method further comprises re-determining the feature distribution model based on the email.

5. The method according to any one of the preceding claims, wherein the feature distribution model comprises both a left-tail ECDF and a right-tail ECDF for each feature.

6. The method according to the preceding claim, wherein the analysis further comprises determining a skewness coefficient for each feature; and wherein the skewness coefficient is used for determining if the tail probability for each of the one or more features is based on the right-tail ECDF or the left-tail ECDF.

7. The method according to any one of the preceding claims, wherein the analysis further comprises:

      - determining an email outlier score for the email, wherein the email outlier score is determined based on the tail probabilities for all of the one or more features;
      - comparing the outlier score to a detection threshold; and

   wherein the identification of anomalous email behavior is provided in response to this comparison.

8. The method according to any one of the preceding claims, wherein the method further comprises:

      • in response to an identification of anomalous email behavior in the email, providing an output to the user for alerting the user;
      • receiving input from the user regarding the identified anomalous email behavior; and
      • in response to receiving the user input, updating the detection threshold according to the user input and/or re-determining the feature distribution model based on the user input.

9. The method according to any one of the preceding claims, wherein the method further comprises:

   • assigning the email to be a verification email for identifying potential false positives of anomalous email behavior and/or false negative detections of anomalous email behavior;
   • receiving input from the user regarding the verification email; and
   • in response to receiving the user input, updating the detection threshold according to the user input and/or re-determining the feature distribution model based on the user input.

10. The method according to any one of the preceding claims, wherein re-determining the feature distribution model based on the user input comprises assigning weights in relation to at least one feature of the one or more features.

11. The method according to any one of the preceding claims, wherein the one or more features comprise features related to email structure in an header and/or a body of the email.

12. The method according to any one of the preceding claims, wherein the one or more features comprise text related features.

13. The method according to any one of the preceding claims, wherein the one or more features comprise uniform resource locator - URL- related features.

14. The method according to any one of the preceding claims, wherein the one or more features comprise features related to the user's email contacts.

15. An email security system comprising means for carrying out the method of any one of the preceding claims, wherein the system comprises:

   - a data collection module configured for receiving the email, wherein the email comprises one or more features;
   - a extraction module configured for performing feature extraction of the one or more features on the email; and
   - an analysing module configured for analysing the one or more features to identify anomalous email behavior using an ECOD algorithm.

**Amended claims in accordance with Rule 137(2) EPC.**

1. A computer-implemented method for improving email security by detecting potentially fraudulent emails, the method comprises:

   • receiving an email, wherein the email comprises one or more features;
   • performing feature extraction of the one or more features from the email;
   • analysing the one or more features to identify anomalous email behavior using an Empirical Cumulative Outlier Detection -ECOD- algorithm, wherein the analysis comprises:

   - determining tail probabilities for each of the one or more features using a feature distribution model representing both normal and anomalous email behavior,
   - determining an email outlier score for the email, wherein the email outlier score is determined based on the tail probabilities for all of the one or more features;
   - comparing the outlier score to a detection threshold; and
   - identifying anomalous email behavior based on the tail probabilities, wherein the identification of anomalous email behavior is provided in response to the comparison of the outlier score to the detection threshold;

   wherein the method further comprises:

   • in response to an identification of anomalous email behavior in the email, providing an output to the user for alerting the user;
   • receiving input from the user regarding the identified anomalous email behavior; and/or

   wherein the method further comprises

   • assigning the email to be a verification email for identifying potential false positives of anomalous email behavior and/or false negative detections of anomalous email behavior;
   • receiving input from the user regarding the verification email; and

   wherein the method further comprises:

   • in response to receiving the user input regarding the identified anomalous email behavior and/or the verification email, updating the detection threshold according to the user input and re-determining the feature distribution model based on the user input, wherein re-determining the feature distribution model based on the user input comprises assigning weights in relation to at least one feature of the one or more features.

**2.** The method according to claim 1, wherein the feature distribution model is based on a plurality of training emails, wherein the plurality of training emails comprises one or more features; and wherein the feature distribution model is determined using an Empirical Cumulative Distribution Function - ECDF - for each of the one or more features across all of the plurality of training emails.

**3.** The method according to claim 2, wherein the plurality of training emails comprises emails received by a same user.

**4.** The method according to any one of the preceding claims, wherein the method further comprises re-determining the feature distribution model based on the email.

**5.** The method according to any one of the preceding claims, wherein the feature distribution model comprises both a left-tail ECDF and a right-tail ECDF for each feature.

**6.** The method according to the preceding claim, wherein the analysis further comprises determining a skewness coefficient for each feature; and wherein the skewness coefficient is used for determining if the tail probability for each of the one or more features is based on the right-tail ECDF or the left-tail ECDF.

**7.** The method according to any one of the preceding claims, wherein the one or more features comprise features related to email structure in an header and/or a body of the email.

**8.** The method according to any one of the preceding claims, wherein the one or more features comprise text related features.

**9.** The method according to any one of the preceding claims, wherein the one or more features comprise uniform resource locator - URL- related features.

**10.** The method according to any one of the preceding claims, wherein the one or more features comprise features related to the user's email contacts.

**11.** An email security system comprising means for carrying out the method of any one of the preceding claims, wherein the system comprises:

> - a data collection module configured for receiving the email, wherein the email comprises one or more features;
> - a extraction module configured for performing feature extraction of the one or more features on the email; and

> - an analysing module configured for analysing the one or more features to identify anomalous email behavior using an ECOD algorithm.

**FIG. 1**

# FIG. 2

Europäisches
Patentamt
European
Patent Office
Office européen
des brevets

# EUROPEAN SEARCH REPORT

**Application Number**

EP 24 22 0947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/238571 A1 (ADIR ALLON [IL] ET AL) 1 August 2019 (2019-08-01) * paragraphs [0018] - [0021]; figure 2 * ----- | 1-15 | INV. H04L9/40 ADD. G06Q10/107 |
| Y | ZHENG LI ET AL: "ECOD: Unsupervised Outlier Detection Using Empirical Cumulative Distribution Functions", ARXIV.ORG, CORNELL UNIVERSITY LIBRARY, 201 OLIN LIBRARY CORNELL UNIVERSITY ITHACA, NY 14853, 5 March 2022 (2022-03-05), XP091173125, * Section 3.3; Algorithm 1; Section 4; TABLE 1 * ----- | 1-15 | |
| A | US 2010/205123 A1 (SCULLEY D [US] ET AL) 12 August 2010 (2010-08-12) * paragraphs [0003], [0015], [0044], [0045] * ----- | 1-15 | |
| A | US 2023/164180 A1 (SINGH MANINDER PAL [MY] ET AL) 25 May 2023 (2023-05-25) * paragraphs [0061], [0114], [0115]; figure 2 * ----- | 1-15 | |
| A | US 2005/193073 A1 (MEHR JOHN D [US] ET AL) 1 September 2005 (2005-09-01) * paragraphs [0029], [0061] - [0064]; figures 2,6,7 * ----- | 1-15 | |

**TECHNICAL FIELDS SEARCHED (IPC)**

H04L
G06Q

The present search report has been drawn up for all claims

| Place of search | Date of completion of the search | Examiner |
|---|---|---|
| Munich | 23 May 2025 | Dingel, Janis |

EPO FORM 1503 03.82 (P04C01)

# ANNEX TO THE EUROPEAN SEARCH REPORT
## ON EUROPEAN PATENT APPLICATION NO.

EP 24 22 0947

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | Publication date | Patent family member(s) | Publication date |
|---|---|---|---|
| US 2019238571 A1 | 01-08-2019 | NONE | |
| US 2010205123 A1 | 12-08-2010 | US 2010205123 A1<br>WO 2008021244 A2 | 12-08-2010<br>21-02-2008 |
| US 2023164180 A1 | 25-05-2023 | NONE | |
| US 2005193073 A1 | 01-09-2005 | NONE | |

EPO FORM P0459

For more details about this annex : see Official Journal of the European Patent Office, No. 12/82